# EUROPÄISCHE PATENTANMELDUNG

(11) **EP 3 144 046 A1**
(43) Veröffentlichungstag der Anmeldung: **22.03.2017**
(21) Anmeldenummer: 16187123.1
(22) Anmeldetag: 02.09.2016
(51) Int. Cl.: B01D 35/147, B01D 29/23, B01D 29/60

(54) **FILTERVORRICHTUNG, INSBESONDERE KRAFTSTOFFFILTER**

(30) Priorität: 16.09.2015 DE 102015217756
(71) Anmelder: Joma-Polytec GmbH, 72411 Bodelshausen (DE)
(72) Erfinder: Pfitzer, Friedhelm, 72414 Rangendingen (DE); Stifel, Torsten, 72401 Haigerloch-Gruol (DE); Heinz, Stefan, 72411 Bodelshausen (DE); Bulach, Sven, 72379 Hechingen (DE)
(74) Vertreter: DREISS Patentanwälte PartG mbB

(57) **Zusammenfassung**

Filtervorrichtung (10) zur Filterung eines Mediums, insbesondere Kraftstofffilter, mit einem Gehäuse (12), mit einem im Gehäuse (12) vorgesehenen Filterelement (18), welches eine Rohseite (24) von einer Reinseite (26) trennt, und mit einem verschließbaren Bypass (56) zur filterfreien fluidischen Verbindung der Rohseite (24) mit der Reinseite (26), wobei das Filterelement (18) zwischen einer Normalbetriebslage und einer Kaltbetriebslage derart verlagerbar ist, dass es in der Kaltbetriebslage den Bypass (56) verschließt und in der Normalbetriebslage den Bypass (56) öffnet.

## Beschreibung

Die Erfindung betrifft eine Filtervorrichtung zur Filterung eines Mediums, insbesondere einen Kraftstofffilter, mit einem Gehäuse, mit einem im Gehäuse vorgesehenen Filterelement, welches eine Rohseite von einer Reinseite trennt, und mit einem verschließbaren Bypass zur filterfreien fluidischen Verbindung der Rohseite mit der Reinseite.

Flüssigkeitsfilter finden in vielen industriellen Erzeugnissen Anwendung. Sie werden bevorzugt in Leitungssystemen eingesetzt, um aus der zu filternden Flüssigkeit Partikel abzuscheiden. Die Filterung ist häufig notwendig, um stromabwärts des Flüssigkeitsfilters gelegene Komponenten oder Vorrichtungen des Leitungssystems vor den Partikeln zu schützen, da diese Komponenten oder Vorrichtungen ansonsten beschädigt würden oder in ihrer Funktionsweise beeinträchtigt wären.

Eine technische Herausforderung ist der Einsatz von Flüssigkeitsfiltern unter Betriebsbedingungen, in denen die Flüssigkeit oder in der Flüssigkeit enthaltene Fraktionen einem Phasenübergang vom flüssigen in den festen Zustand unterliegen. In Anwendungen als Kraftstofffilter kann die Filterwirkung bei tiefen Temperaturen durch die Ausbildung von Wachskristallen (Paraffinen) aus dem Kraftstoff beeinträchtigt werden, da diese Wachskristalle die Oberfläche des Filtermediums zusetzen können und dabei den Durchfluss von Flüssigkeit stark reduzieren oder sogar unterbinden können. Durch eine derartige Blockade des Flüssigkeitsfilters in einem Kraftstoffversorgungssystems eines Kraftfahrzeugs kann das Starten des Motors mangels Kraftstoffs in unerwünschter Weise verhindert werden. Weiterhin kann bei Temperaturen, welche unter dem Gefrierpunkt liegen, in der Flüssigkeit enthaltenes Wasser zu Eis werden und dadurch den Filter verstopfen.

Um derartige temperaturbedingte Probleme zu verhindern, sind aus dem Stand der Technik verschiedene Maßnahmen vorbekannt. So werden häufig Elemente in den Kraftstofffilter eingebracht, die die Ausbildung von Wachskristallen verhindern sollen oder derartige Wachskristalle nach ihrer Entstehung durch Temperaturerhöhung wieder auflösen sollen. Weiterhin ist die Erwärmung der Kraftstofffilter zur Verhinderung der Ausbildung von Wachskristallen vorbekannt. Schließlich ist auch eine Rezyklierung von erwärmten, überschüssigen Kraftstoff, welcher in der Einspritzpumpe nicht verbraucht wird, vorbekannt. Diese Lösungen sind alle teuer, vergleichsweise kompliziert aufgebaut sowie regelmäßig auch sehr energieintensiv.

Der vorliegenden Erfindung liegt deswegen die Aufgabe zugrunde, eine Filtervorrichtung bereitzustellen, welche einfach und bauraumsparend aufgebaut ist sowie wenig energieintensiv ist und dennoch funktionssicher arbeitet.

Diese Aufgabe wird gelöst mit einer Filtervorrichtung mit den Merkmalen des Anspruchs 1. Erfindungsgemäß ist folglich vorgesehen, dass das Filterelement zwischen einer Normalbetriebslage und einer Kaltbetriebslage derart verlagerbar ist, dass es in der Kaltbetriebslage den Bypass öffnet und in der Normalbetriebslage den Bypass verschließt.

Das bewegbare Filterelement wird folglich je nach Temperatur in die entsprechende Lage bewegt. In der Kaltbetriebslage kann dann durch den vom Filterelement freigegebenen Bypass das Medium von der Rohseite ohne den Filter zu durchströmen hin zur Reinseite fließen. In der Normalbetriebslage verschließt das Filterelement den Bypass; das Medium fließt dann durch das Filterelement von der Rohseite zur Reinseite. Insbesondere dadurch, dass das Filterelement als solches temperaturabhängig verlagert wird, kann eine vergleichsweise einfach aufgebaute und bauraumsparende Filtervorrichtung bereitgestellt werden.

Zudem ist vorteilhafterweise ein temperatursensitives Stellelement vorgesehen, welches das Filterelement insbesondere oberhalb einer Grenztemperatur gegen ein Rückstellelement in die Normalbetriebslage drängt. Das Stellelement kann auch derart vorgesehen sein, dass es das Filterelement unterhalb der Grenztemperatur gegen ein Rückstellelement in die Kaltbetriebslage drängt.

Bei der Grenztemperatur, bei welcher das Filterelement von der einen Betriebslage in die andere Betriebslage verlagert wird, handelt sich vorzugsweise nicht um einen Temperaturpunkt, sondern vielmehr um einen Temperaturbereich.

Da das Stellelement das Filterelement vorzugsweise nur in eine Richtung verlagert, ist das Rückstellelement erforderlich, um das Filterelement wieder zurück zu verlagern.

Vorzugsweise ist das Filterelement hülsenartig ausgebildet und wird vom Medium in radialer Richtung durchströmt. Eine Verlagerung des Filterelements erfolgt dann vorzugsweise entlang der Mittellängsachse des Filterelements. Dadurch kann auf einfach Art und Weise ein funktionssicheres Verschließen oder Öffnen des Bypasses erfolgen.

Vorteilhafterweise sieht das Filterelement dabei wenigstens eine Steuerkante vor, die zur Bildung des Bypasses von einem gehäuseseitigen Sitz entfernbar, insbesondere abhebbar, und/oder zum Schließen des Bypasses hin zu diesem verlagerbar, insbesondere beaufschlagbar, ist. Die Steuerkante kann dabei von einer freien Stirnseite des Filterelements gebildet werden. Durch axiales Verlagern des Filterelements hebt dann die Steuerkante von einem entsprechend ausgebildeten Gehäusesitz ab, wodurch der Bypass geöffnet wird. Bei ansteigender Temperatur wird dann das Filterelement wieder gegen den Gehäusesitz gedrängt, wodurch der Bypass geschlossen wird.

Das Stellelement als solches ist vorzugsweise aus einem SMA (Shape Memory Alloy) - Werkstoff hergestellt und als Federelement ausgebildet, dass das Filterelement unterhalb der Grenztemperatur in die Kaltbetriebslage bzw. in die Normalbetriebslage drängt. Derartige SMA-Werkstoffe, auch als Formgedächtnislegierungen bezeichnet, sind aus dem Stand der Technik bekannt. Mit Hilfe von Formgedächtnislegierungen kann auf besonders einfache Art und Weise eine temperaturabhängige Schaltung des Stellelements bereitgestellt werden. SMA-Legierungen können unterhalb einer Grenztemperatur verformt werden und nehmen bei Erwärmung über eine Grenztemperatur wieder ihre ursprüngliche Form ein. Über die Legierung ist dabei einstellbar, bei welcher Grenztemperatur eine Gefügeumwandlung von insbesondere Martensit zu Austenit stattfindet. Dieser Prozess ist reversibel, was bedeutet, dass dann, wenn die Formgedächtnislegierung unter eine Grenztemperatur erkaltet, eine Phasenumwandlung von insbesondere Austenit zu Martensit stattfindet. Ein Verlagern des Filterelements in die Normalbetriebslage erfolgt vorzugsweise über das Stellelement. Das Rückbewegen des Filterelements aus der Normalbetriebslage in die Kaltbetriebslage kann insbesondere über ein Rückstellelement erfolgen, das ebenfalls als Federelement ausgebildet sein kann.

Das Stellelement kann dabei als beispielsweise das Filterelement wenigstens abschnittsweise umgebendes Schraubenfederelement ausgebildet sein, das das Filterelement gegen die Rückstellkraft des Rückstellelements in die Normalbetriebslage drängt. Bei Unterschreiten der Grenztemperatur verformt sich das Stellelement vorzugsweise derart, dass seine Federkonstante und damit seine Federkraft unterhalb die Rückstellkraft des Rückstellelements verringert wird, wodurch das Filterelement vom Rückstellelement in die Kaltbetriebslage bewegt wird.

Das Rückstellelement kann auch als ein zwischen der freien Stirnseite des Filterelements und dem gehäuseseitigen Sitz angeordnetes Wellenfeder- oder Tellerfederelement ausgebildet sein. Ein solches Federelement wird dann in der Normalbetriebslage, also bei verschlossenem Bypass, vom Stellelement über das Filterelement elastisch verformt und plattgedrückt, so dass kein Spalt zwischen dem Filterelement und dem Sitz vorgesehen ist. Wird die Grenztemperatur unterschritten, so sinken die Federkonstante und damit die Federkraft des Stellelements unter die des Rückstellelements, wodurch sich das Rückstellelement elastisch rückverformen kann. Das Filterelement hebt dann von seinem Sitz ab, so dass letztlich ein Spalt zwischen dem Filterelement und dem Gehäusesitz entsteht, der den Bypass bildet.

Das Filterelement als solches weist vorzugsweise einen Filterstoff und einen den Filterstoff tragenden Filterkäfig auf. Als Filterstoff kommt beispielsweise ein Vliesstoff oder ein Edelstahlsieb in Betracht. Der Filterstoff kann insbesondere am Filterkäfig radial innenliegend angeordnet sein, wobei es vorteilhaft ist, wenn das insbesondere als Schraubenfeder ausgebildete Stellelement dann auf der radialen Außenseite des Filterkäfigs angeordnet sein kann.

Das Filterelement als solches kann vorzugsweise in einem Ringzylinderraum auf einem Mittelkopf verlagerbar angeordnet sein. Der Ringzylinderraum kann dabei in radialer und insbesondere auch axialer Richtung von einem auf dem Mittelkopf angeordneten Abdeckteil begrenzt sein.

Das das Filterelement insbesondere in die Normalbetriebslage drängende Stellelement kann sich dabei einerends am Abdeckteil und andererends am Filterelement abstützen.

Der Mittelkopf kann insbesondere in radialer Richtung verlaufende und vom Filterelement abgedeckte Ausgänge aufweisen. Das Abdeckteil kann einen mit dem Ringzylinderraum verbundenen Fluidausgang aufweisen. Das zu filternde Medium durchströmt folglich in der Normalbetriebslage zunächst von den mittelkopfseitigen Ausgängen kommend das Filterelement, durchtritt dann den Ringzylinderraum und strömt über den Fluidausgang ab.

Um in der Kaltbetriebslage ein sicheres Durchströmen des Mediums durch den Bypass zu gewährleisten, ist es vorteilhaft, wenn an der Steuerkante des Filterelements und/oder am gehäuseseitigen Sitz Aussparrungen zur Bildung des Bypasses in der Kaltbetriebslage vorgesehen sind.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es ist zeigen:
Figur 1 eine erfindungsgemäße Filtervorrichtung in Normalbetriebslage mit teilaufgeschnittenem Gehäuse;
Figur 2 die Filtervorrichtung gemäß Figur 1 im Längsschnitt;
Figur 3 die Filtervorrichtung gemäß Figur 1 in perspektivischer Ansicht;
Figur 4 den in Figur 2 mit IV gekennzeichneten Ausschnitt in Vergrößerung;
Figur 5 - 8 die in den Figuren 1 bis 4 gezeigten Ansichten der Filtervorrichtung in Kaltbetriebslage.

Die in den Figuren gezeigte Filtervorrichtung 10 umfasst ein Gehäuse 12, das von einem Grundteil 14 und einem Abdeckteil 16 gebildet wird. Im Gehäuse 12 ist ein hülsenartiges Filterelement 18 vorgesehen, das einen Filterstoff 20, der aus einem Edelstahlgewebe gebildet ist, und einen Filterkäfig 22 umfasst. Das Filterelement 18 trennt dabei eine Rohseite 24 von einer Reinseite 26.

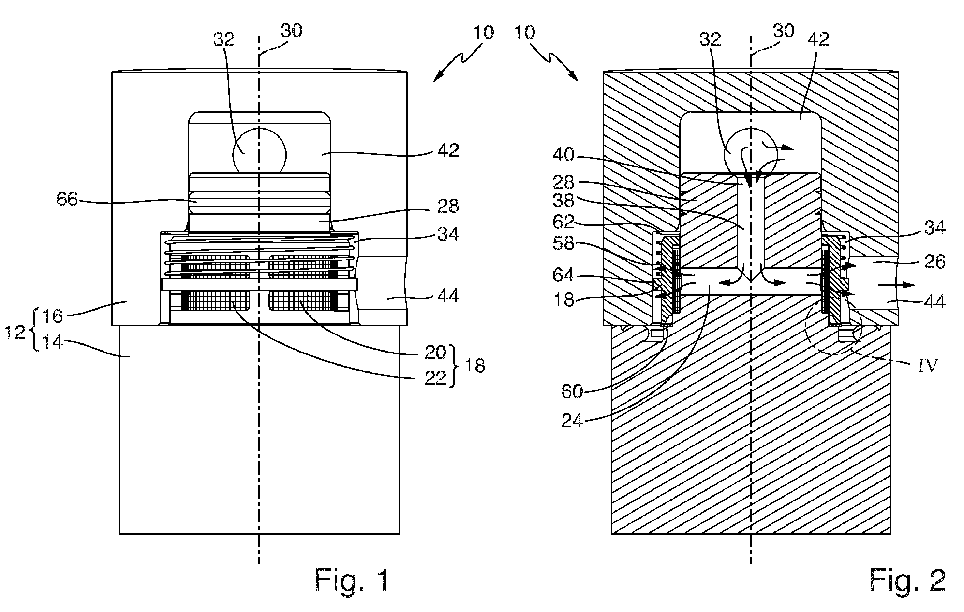

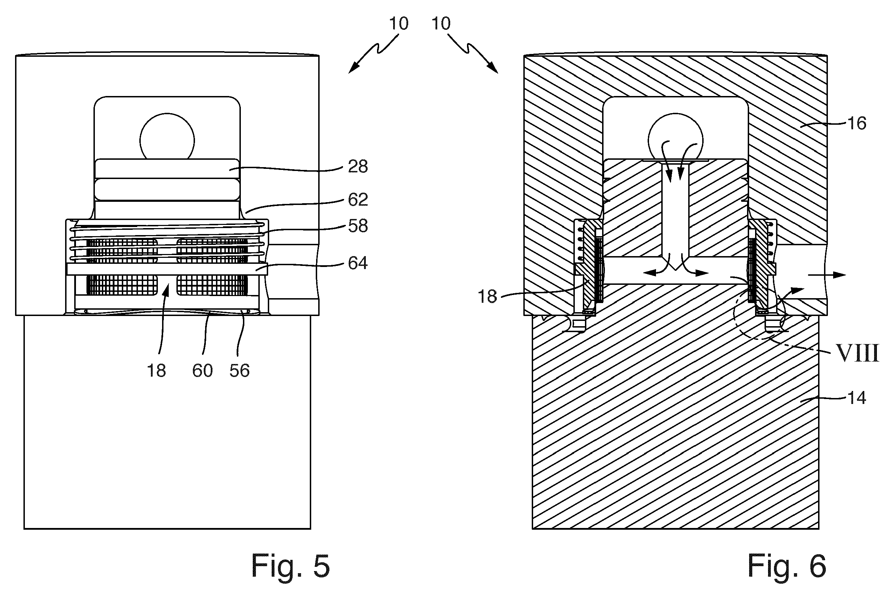

Das Grundteil 16 des Gehäuses weist einen zylindrischen Mittelkopf 28 auf, auf welchem das Filterelement 18 entlang seiner Mittellängsachse 30 axial verlagerbar angeordnet ist. In den Figuren 1 bis 4 befindet sich das Filterelement 18 in einer Normalbetriebslage. In den Figuren 5 bis 8 befindet sich das Filterelement 18 in einer Kaltbetriebslage.

Das Gehäuse 12, bzw. das Abdeckteil 16, weist einen Einlass 32 auf, durch welchen das zu filternde Medium in einen Raum 42 einströmt. Über Kanäle 38 wird das Medium dann einem Ringzylinderraum 34, der vom Mittelkopf 28 und dem Abdeckteil 16 gebildet wird, zugeführt. Im Betrieb durchströmt dann das Medium das Filterelement 18 von radial innen nach radial außen. Am Abdeckteil 16 ist, wie insbesondere aus Figur 2 deutlich wird, ein Ausgang 44 vorgesehen, in den das gefilterte Medium mündet. Der Mittenkopf 28 als solcher weist an seiner Stirnseite einen Einlass 40 auf, in welchen das Medium aus dem Raum 42 in den Mittenkopf 28 bzw. die Kanäle 38 einströmen kann.

Das Abdeckteil 16 kann zur Montage in axialer Richtung auf das Grundteil 14 aufgeschoben werden, wobei dann der Mittelkopf 28 in eine am Abdeckteil 16 vorgesehene Zylinderausnehmung eingreift.

Das Filterelement 18 weist an seiner der Stirnseite 46 abgewandten oberen Seite einen nach radial innen gerichteten Ringbund 68 auf, der dichtend am Außenumfang des Mittenkopfes 28 dichtend und gleitend anliegt. Der Mittenkopf 28 kann dabei beispielsweise Teil einer Zumesseinheit sein, die im Grundteil 14 vorgesehen ist. Über die Zumesseinheit kann im Betrieb eine dosierte Menge vom Medium über den Einlass 32 der Filtervorrichtung 10 zugeführt werden. Die Zumesseinheit kann beispielsweise eine Dieseleinspritzpumpe sein und das Medium Dieselkraftstoff.

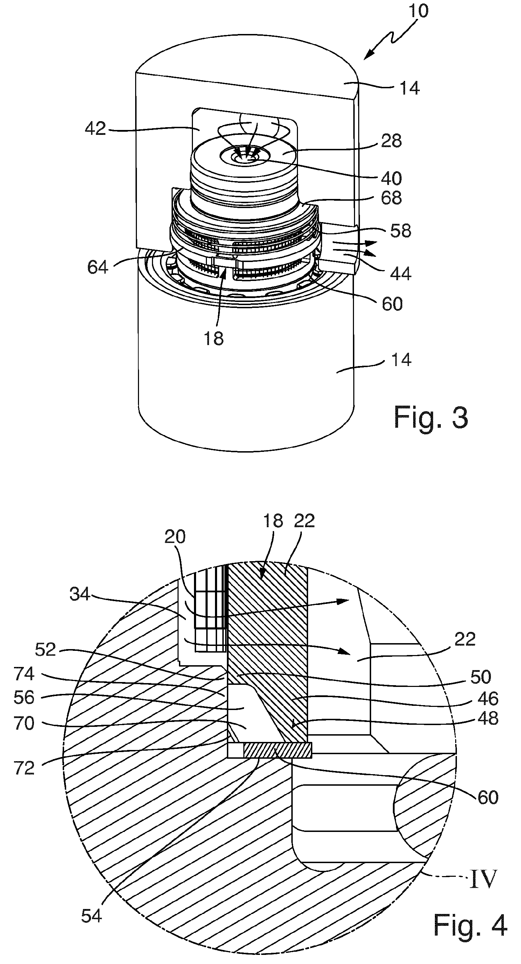

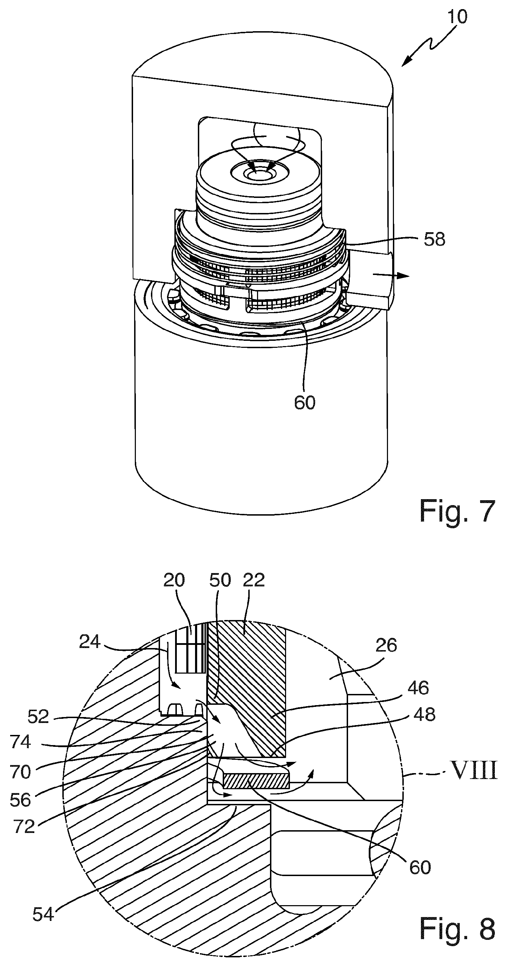

Wie insbesondere aus dem Ausschnitt gemäß Figur 4 und 8 deutlich wird, weist das Filterelement 18 an seiner unteren, vom Filterkäfig 22 gebildeten freien Stirnseite 46 insgesamt zwei Steuerkanten 48 und 50 auf. Die Steuerkante 50 wirkt dabei mit einem gehäuseseitigen Sitz 52 und die Steuerkante 48 mit einem gehäuseseitigen Sitz 54 zur Bildung eines Bypasses 56 zusammen. In der in den Figuren 1 bis 4 dargestellten Normalbetriebslage ist, wie insbesondere aus Figur 4 deutlich wird, der Bypass 56 verschlossen. In der in den Figuren 5 bis 8 dargestellten Kaltbetriebslage ist, wie insbesondere aus Figur 8 deutlich wird, der Bypass 56 geöffnet. Bei geöffnetem Bypass 56 kann, wie in Figur 8 angedeutet, das Medium filterfrei durch den Bypass 56 von der Rohseite 24 zur Reinseite 26 strömen.

Zur Verlagerung des Filterelements 18 aus der Normalbetriebslage in die Kaltbetriebslage ist ein temperatursensitives Stellelement 58 in Form einer Schraubenfeder vorgesehen. Ferner befindet sich ein Rückstellelemente in Form einer Wellenfeder 60, wie insbesondere aus Figur 2 und 4 bzw. 6 und 8 deutlich wird, zwischen der Stirnseite 46 des Filterkäfigs 22 und dem Sitz 54. In der Normalbetriebslage wird der Filterkäfig 22 in axialer Richtung vom Stellelement 58 gegen die Wellenfeder 60 derart gedrängt, dass dieses platt gegen den Sitz 54 gedrückt wird. Die Wellenfeder 60 hat dann die Form einer flachen Ringscheibe.

Das Stellelement 58 ist aus einem SMA-Material, das derart ist, dass bei Unterschreiten einer Grenztemperatur die Federkonstante des Stellelements 58 verringert wird, wodurch das Stellelement 58 von der sich elastisch rückverformenden Wellenfeder 60 bedingt zusammen gedrückt wird. Dadurch erfolgt ein axiales Verlagern des Filterelements 28 entgegen der Kraft des Stellelements 58, wodurch zum einen die Steuerkante 50 vom Sitz 52 und die Steuerkante 48 vom Sitz 54 abhebt. Dadurch wird bewirkt, dass, wie in Figur 8 gezeigt, der Bypass 56 geöffnet wird.

Das Stellelement 58 ist dabei derart gewählt, dass bei Unterschreiten einer Grenztemperatur, die insbesondere im Bereich von 0°C liegen kann, der Bypass 56 geöffnet wird, so dass das Medium ungefiltert vom Einlass 32 zum Ausgang 44 strömen kann. Wird die Grenztemperatur überschritten, so drängt das Stellelement 58 das Filterelement 22 und das Rückstellelement 60 in die Normalbetriebslage, so dass die Wellenfeder 60 wieder platt gegen den Sitz 54 gedrückt wird und das Medium den Filterstoff 20 passiert.

Wie aus insbesondere Figur 2 deutlich wird, stützt sich das Stellelement 58 einerseits an einer Gehäuseschulter 62 ab. Andererseits stützt es sich an einem filterkäfigseitigen Vorsprung 64 ab. Dadurch wird der Filterkäfig 22 bzw. das Filterelement 18 in die Normalbetriebslage gedrängt.

Bei der gezeigten Ausführungsform ist, wie bereits beschrieben, das Rückstellelement 60 zwischen der Stirnseite 46 des Filterelements 18 und einem Sitz 54 am Grundteil vorgesehen. Alternativ ist denkbar, ein Rückstellelement vorzusehen, das entsprechend dem Stellelement 58 als Schraubenfeder ausgebildet ist, und dass einerends am Vorsprung 64 und andererends am Grundteil 14 angreift.

Um in der in Figur 8 gezeigten Kaltbetriebslage ein sicheres Durchströmen des Mediums durch den Bypass zu gewährleisten, sind an der Steuerkante des Filterkäfigs 22 Aussparrungen 70 vorgesehen. Diese Aussparungen 70 sind über die Innenoberfläche des Filterkäfigs 22 verteilt angeordnet, wobei zwischen den Aussparungen 70 Käfigstege 72 vorgesehen sind, die den Filterkäfig 22 insbesondere in der Kaltbetriebslage sicher am Fuß 74 in axialer Richtung führen und ein Verlagern des Filterkäfigs 22 in radialer Richtung verhindern.

Wie aus insbesondere Figur 7 deutlich wird, weist der Mittelkopf 28 an seinem äußeren Umfang einen Dichtring 66 auf, durch welchen die Kammer 44 dicht vom Ringzylinderraum 34 getrennt wird.

## Patentansprüche

1. Filtervorrichtung (10) zur Filterung eines Mediums, insbesondere Kraftstofffilter, mit einem Gehäuse (12), mit einem im Gehäuse (12) vorgesehenen Filterelement (18), welches eine Rohseite (24) von einer Reinseite (26) trennt, und mit einem verschließbaren Bypass (56) zur filterfreien fluidischen Verbindung der Rohseite (24) mit der Reinseite (26), **dadurch gekennzeichnet, dass** das Filterelement (18) zwischen einer Normalbetriebslage und einer Kaltbetriebslage derart verlagerbar ist, dass es in der Kaltbetriebslage den Bypass (56) öffnet und in der Normalbetriebslage den Bypass (56)verschließt.

2. Filtervorrichtung (10) nach Anspruch 1, **dadurch gekennzeichnet, dass** ein temperatursensitives Stellelement (58) vorgesehen ist, welches das Filterelement (18) oberhalb der Grenztemperatur gegen ein Rückstellelement (60) in die Normalbetriebslage oder welches das Filterelement (18) unterhalb der Grenztemperatur gegen ein Rückstellelement (60) in die Kaltbetriebslage drängt.

3. Filtervorrichtung (10) nach Anspruch 1 oder 2, **dadurch gekennzeichnet, dass** das Filterelement (18) hülsenartig ausgebildet und in radialer Richtung vom Medium durchströmbar und entlang seiner Mittellängsachse (30) axial verlagerbar ist.

4. Filtervorrichtung (10) nach Anspruch 1, 2 oder 3, **dadurch gekennzeichnet, dass** das Filterelement (18) wenigstens eine Steuerkante (48, 50) aufweist, die zur Bildung des Bypasses von wenigstens einem gehäuseseitigen Sitz (52, 54) entfernbar oder zum Schließen des Bypasses (56) hin zu diesem verlagerbar ist.

5. Filtervorrichtung (10) nach einem der vorhergehenden Ansprüche, **dadurch gekennzeichnet, dass** das Stellelement (58) als ein aus einem SMA-Werkstoff hergestelltes Federelement ausgebildet ist, dass das Filterelement (18) oberhalb der Grenztemperatur in die Normalbetriebslage drängt.

6. Filtervorrichtung (10) nach einem der vorhergehenden Ansprüche, **dadurch gekennzeichnet, dass** das Stellelement (58) als das Filterelement (18) wenigstens abschnittsweise umgebendes Schraubenfederelement ausgebildet ist.

7. Filtervorrichtung (10) nach einem der vorhergehenden Ansprüche, **dadurch gekennzeichnet, dass** das Filterelement (18) einen Filterstoff (20) und einen den Filterstoff (20) tragenden Filterkäfig (22) umfasst.

8. Filtervorrichtung (10) nach einem der vorhergehenden Ansprüche, **dadurch gekennzeichnet, dass** das Filterelement (18) in einem Ringzylinderraum (34) auf einem Mittelkopf (28) verlagerbar angeordnet ist.

9. Filtervorrichtung (10) nach Anspruch 8, **dadurch gekennzeichnet, dass** der Ringzylinderraum (34) in radialer und/oder axialer Richtung von einem auf dem Mittelkopf (28) angeordneten Abdeckteil (16) begrenzt wird.

10. Filtervorrichtung (10) nach Anspruch 4, **dadurch gekennzeichnet, dass** an der Steuerkante des Filterelements (18) und/oder am gehäuseseitigen Sitz (52, 54) Aussparrungen zur Bildung des Bypasses in der Kaltbetriebslage vorgesehen sind.

11. Filtervorrichtung (10) nach einem der vorhergehenden Ansprüche, **dadurch gekennzeichnet, dass** das Rückstellelement (60) als das Filterelement (18) wenigstens abschnittsweise umgebendes Schraubenfederelement oder als ein zwischen der freien Stirnseite des Filterelements (18) und dem gehäuseseitigen Sitz angeordnetes Wellenfeder- oder Tellerfederelement ausgebildet ist.
